# DEMANDE DE BREVET EUROPEEN

(11) **EP 4 197 637 A1**
(43) Date de publication de la demande: **21.06.2023**
(21) Numéro de dépôt: 22211246.8
(22) Date de dépôt: 02.12.2022
(51) Int. Cl.: B01L 3/00, F16K 99/00

(54) **COMPOSANT FLUIDIQUE ET DISPOSITIF DE CONTRÔLE D'ACCÈS FLUIDIQUE**

(30) Priorité: 17.12.2021 FR 2113754
(71) Demandeur: Commissariat à l'énergie atomique et aux énergies alternatives, 75015 Paris (FR)
(72) Inventeur: BLAIRE, Guillaume, 38054 Grenoble cedex 09 (FR); ALESSIO, Manuel, 38054 GRENOBLE cedex 09 (FR); BAQUE, Mélissa, 38054 Grenoble cedex 09 (FR); ROUX, Jean-Maxime, 38054 Grenoble cedex 09 (FR)
(74) Mandataire: INNOV-GROUP

(57) **Abrégé**

L'invention concerne un composant (1, 10) fluidique, comprenant :
- Un circuit fluidique présentant au moins un accès fluidique destiné à être traversé par un fluide (F),
- Des moyens d'actionnement capables de se dilater,
- Une membrane (35) déformable actionnable par dilatation desdits moyens d'actionnement,
- Des moyens de scellement de l'accès fluidique comprenant au moins un corps d'un composé fusible configuré pour prendre deux états :
∘ Un premier état solide,
∘ Un deuxième état fondu obtenu sous l'effet d'une augmentation de température,

- Ledit corps de composé fusible étant agencé pour être déplacé à l'état fondu par dilatation des moyens d'actionnement, entre une position d'attente et une position distincte de scellement de l'accès fluidique.

## Description

### Domaine technique de l'invention

La présente invention se rapporte à un composant fluidique et à un dispositif de contrôle d'accès fluidique. Le dispositif peut notamment comporter une chambre de réaction, pouvant être isolée en cours de réaction et scellée après réaction, par différents mécanismes de vanne fluidique.

### Etat de la technique

Il est connu des documents US2012/064597A1**,** US2013/130262A1**,** US2007/166199A1 et US2006/076068A1 des dispositifs microfluidiques formés d'un réseau micro-fluidique de capsules micro-fluidiques et de canaux reliant les capsules entre elles. Chaque capsule micro-fluidique comporte une chambre dans laquelle débouche un canal d'entrée et dont ressort un canal de sortie. Une membrane déformable est commandée entre deux positions pour conférer deux états distincts à la capsule, un premier état dans lequel le canal d'entrée communique avec le canal de sortie via la chambre autorisant un transfert de fluide, et un deuxième état dans lequel la membrane bloque la communication entre les deux canaux, empêchant l'écoulement de fluide et le remplissage de la chambre de la capsule. La commande de la membrane entre ses deux positions est réalisée à l'aide de moyens pneumatiques, par exemple en exerçant sur elle une pression positive ou une pression négative. Pour réaliser ces dispositifs, les solutions connues sont réalisées par un assemblage multicouche dans lequel la membrane déformable forme une couche intermédiaire prise entre deux substrats. La membrane est souvent collée, pincée entre deux couches ou fixée par de l'adhésif double-face prédécoupé. Dans ces documents les capsules microfluidiques sont intégrées dans des cartes ou cartouches microfluidiques qui possèdent des connecteurs pneumatiques de façon à être connectées à des sources et régulateurs de pression externes. Un inconvénient de ces solutions est d'avoir à assurer une connexion sans fuites d'air ou de fluide entre la carte microfluidique intégrant les capsules et les sources de pression. Un autre inconvénient est le bruit produit par les pompes ou compresseurs généralement employés comme sources de pression. Une alternative aux pompes et compresseurs est le recours à une cartouche de gaz mais la pression produite doit être régulée et, de plus, l'emploi de telles sources de pression peut être soumis à des réglementations telles que par exemple pour un transport par avion.

La demande de brevet EP3326717A1 propose une autre solution dans laquelle la vanne est créée par l'ajout dans une cavité d'un liquide destiné à former un élément en matériau déformable. Le mécanisme d'actionnement de l'invention est commandé par une unité de commande et de traitement pour déformer l'élément en matériau déformable de chaque capsule, par exemple en exerçant une pression ou une impulsion de pression au moyen d'un fluide de pression, et en particulier d'un gaz de pression via les trous d'actionnement de chaque capsule. L'unité de commande et de traitement est gérée par une pluralité de modules logiciels, chaque module logiciel correspondant à une ou plusieurs des étapes du procédé. Dans cette invention, la source de pression n'est pas décrite mais la commande par une pluralité de modules s'avère complexe.

Ces différentes solutions de vannes sont à actionnement pneumatique et nécessitent des moyens externes complexes pour être actionnées. Ces moyens comportent généralement des pompes ou des compresseurs externes comme sources de pression, des régulateurs de pression et parfois aussi des électrovannes. Ces moyens sont externes aux dispositifs microfluidiques si bien que des connexions pneumatiques étanches doivent être assurées. En outre ces moyens doivent être commandés et régulés par des mécanismes dédiés ou encore pilotés par des circuits électroniques et éventuellement des logiciels.

Le document référencé *"*Closable Valves and Channels for Polymeric Microfluidic Devices » (P. Clark &al, 2020*)"* décrit trois approches originales de vannes de scellement. La première approche consiste en une chambre attenante au canal à fermer où les constituants d'une mousse expansive sont mélangés. La réaction produite par ce mélange provoque l'expansion de la mousse et le scellement du canal. Cette approche permet bien un scellement passif après actionnement de la vanne, mais nécessite par contre une architecture fluidique complexe pour réaliser le mélange des constituants de la mousse et l'embarquement de ces dits réactifs. De plus, la durée nécessaire à la réaction chimique utilisée est de l'ordre de la dizaine de minutes, ce qui est long et ne permet pas de sceller une chambre réactionnelle pour éviter tout risque de dispersion en cas de retrait intempestif du dispositif par l'opérateur. Les deux autres approches du document sont basées sur la fonte soit thermique, soit chimique d'une couche de polymère percée d'un trou. C'est par ce trou que le liquide passe lorsque la vanne est ouverte. En chauffant et en appliquant une pression contrôlée sur la couche autour du trou (deuxième approche) ou en déposant un produit chimique à même de dissoudre la couche autour du trou (troisième approche), la couche est localement fondue, le polymère devenu liquide va coalescer et boucher le trou en refroidissant. Dans ces deux approches, les conditions opératoires sont complexes à intégrer à un dispositif. Pour l'approche thermique, il faut en effet atteindre des températures bien supérieures à 100°C, ce qui est peu compatible avec l'embarquement de réactifs sensibles à la température tels que des enzymes employées par exemple dans des réactions de types biomoléculaires. Pour l'approche chimique, il est relativement complexe d'intégrer un solvant capable de dissoudre une couche en polymère dans un dispositif principalement en polymère.

La demande de brevet WO2007/044917A2 décrit également une architecture de vanne fluidique.

Par ailleurs, il n'était pas forcément aisé de disposer d'une solution à la fois capable d'isoler une chambre fluidique dans laquelle a lieu une réaction, pendant que la réaction se produit, et de sceller cette chambre de réaction une fois que la réaction est terminée pour éviter toute dispersion des produits de la réaction y compris en cas d'erreur de manipulation, ou encore en cas d'erreurs logicielle, mécanique ou électronique. En effet, les vannes sont généralement monostables, c'est-à-dire qu'elles nécessitent le maintien d'un signal de pilotage pour rester dans une position définie. Ainsi, elles ne sont pas forcément adaptées pour sceller une chambre de manière définitive, en l'absence d'une commande.

Par ailleurs, il est peut s'avérer pertinent de disposer d'un composant fluidique intégrant un mécanisme de vanne fluidique, qui soit rapidement déployable sur le terrain.

Un premier but de l'invention est d'abord de proposer un composant fluidique répondant à cette exigence.

Un deuxième but de l'invention est de proposer un dispositif, adapté par exemple pour gérer l'accès fluidique à une chambre, que ce soit pour l'isoler temporairement ou pour la sceller de manière quasi-irréversible.

### Exposé de l'invention

Ce premier but est atteint par un composant fluidique, comprenant :
- Un circuit fluidique présentant au moins un accès fluidique destiné à être traversé par un fluide,
- Des moyens d'actionnement capables de se dilater,
- Une membrane déformable actionnable par dilatation desdits moyens d'actionnement et configurée pour se déplacer entre une première position dans laquelle elle autorise le passage du fluide à travers l'accès fluidique et une deuxième position de fermeture dans laquelle elle bloque le passage du fluide à travers l'accès fluidique,
- Des moyens de scellement de l'accès fluidique comprenant au moins un corps d'un composé fusible configuré pour prendre deux états :
   ∘ Un premier état solide,
   ∘ Un deuxième état fondu obtenu sous l'effet d'une augmentation de température,
- Ledit corps de composé fusible étant agencé pour être déplacé à l'état fondu par dilatation des moyens d'actionnement, entre une position d'attente et une position distincte de scellement de l'accès fluidique.

Selon une particularité, les moyens d'actionnement capables de se dilater comportent un réservoir étanche rempli d'un volume d'air, coopérant via un passage fluidique avec la membrane.

Selon une autre particularité, les moyens d'actionnement comportent une bulle de gaz apte à se dilater et piégée dans un emplacement par ledit corps de composé fusible. Selon une autre particularité, le passage fluidique est initialement obturé par le corps de composé fusible présent dans son premier état solide et dans sa position d'attente. Selon une autre particularité, dans sa position de scellement, le corps de composé fusible vient se déposer sur une face de la membrane, qui est opposée à une face de fermeture de l'accès fluidique.

Selon une autre particularité, le composant est réalisé sous la forme d'un élément monobloc.

Selon une autre particularité, la membrane est réalisée dans un matériau de type élastomère.

Selon une autre particularité, le composé fusible est une paraffine choisie parmi le docosane, le tricosane, le tetracosane, le pentacosane, l'hexacosane et l'octaconsane.

Le deuxième but de l'invention est atteint par un dispositif fluidique comportant :
- Un composant fluidique tel que défini ci-dessus,
- Des moyens de chauffage agencés pour :
   ∘ Chauffer ledit corps de composé fusible à une température suffisante pour le faire passer de son premier état à son deuxième état,
   ∘ Dilater lesdits moyens d'actionnement, entraînant une déformation de la membrane de sa première position vers sa deuxième position et le déplacement du corps de composé fusible dans son deuxième état vers la position de scellement de l'accès fluidique.

Selon une particularité, le circuit fluidique comporte une chambre de réaction et les moyens de chauffage sont agencés pour assurer à la fois un chauffage de :
∘ Ladite chambre de réaction pour réaliser une réaction de détection, et
∘ Dudit corps de composé fusible à une température suffisante pour le faire passer de son premier état à son deuxième état,
∘ Et pour dilater lesdits moyens d'actionnement, entraînant une déformation de la membrane de sa première position vers sa deuxième position et le déplacement du corps de composé fusible dans son deuxième état vers la position de scellement de l'accès fluidique.

De manière avantageuse, le module de chauffage comporte au moins deux branches résistives en parallèle, configurées chacune pour présenter une résistance électrique distincte, la première branche résistive étant dédiée à fournir une première puissance thermique et la deuxième branche résistive étant dédiée à fournir une deuxième puissance thermique, ladite première puissance thermique étant plus élevée que la deuxième puissance thermique.

Selon une autre particularité, le module de chauffage comporte au moins deux branches résistives en série, configurées chacune pour présenter une résistance électrique distincte, la première branche étant dédiée à fournir une première puissance thermique et la deuxième branche dédiée à fournir une deuxième puissance thermique, distincte de la première puissance thermique.

L'invention concerne également un procédé d'analyse mis en œuvre dans un dispositif fluidique tel que défini ci-dessus, ledit procédé consistant à activer les moyens de chauffage jusqu'à une température suffisante pour à la fois :
∘ Mettre en œuvre une réaction de détection dans ladite chambre de réaction,
∘ Actionner la membrane vers sa position de fermeture pour isoler la chambre de réaction lors de ladite réaction de détection,

Amorcer un scellement de la chambre de réaction par fusion du corps de composé fusible et déplacement dudit corps à l'état fondu vers sa position de scellement.

Il faut noter que le fractionnement du module de chauffage en au moins deux branches résistives permet avantageusement de fournir au moins deux puissances thermiques distinctes, aux différents composants du dispositif pour mieux séquencer le procédé.

### Brève description des figures

D'autres caractéristiques et avantages vont apparaître dans la description détaillée qui suit faite en regard des dessins annexés dans lesquels :

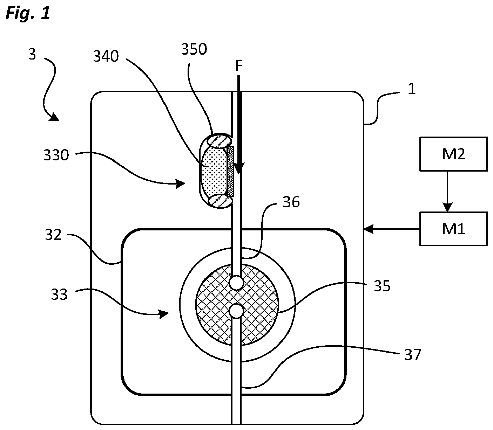

- La figure 1 représente en vue de dessus et de manière schématique le dispositif d'accès fluidique conforme à l'invention ;
- La figure 2 illustre le principe de fonctionnement du premier mécanisme de vanne fluidique employé dans le dispositif de l'invention ;
- La figure 3 illustre le principe de fonctionnement du deuxième mécanisme de vanne fluidique employé dans le dispositif de l'invention ;
- Les figures 4A à 4C illustrent par plusieurs vues le principe de fonctionnement du dispositif conforme à l'invention ;
- Les figures 5A à 5C représentent une variante de réalisation du dispositif conforme à l'invention et illustrent son principe de fonctionnement ;
- La figure 6 montre un mode de réalisation avantageux du module de chauffage utilisé dans le dispositif de type vanne fluidique de l'invention.

### Description détaillée d'au moins un mode de réalisation

Dans la suite de la description, les termes "amont" et "aval" sont à comprendre en tenant compte du sens de circulation du fluide dans le circuit fluidique considéré.

Dans la suite de la description, dans un mécanisme de vanne fluidique, une vanne à l'état ouvert laisse passer le fluide (état 1 ou ON) et une vanne à l'état fermé bloque le passage du fluide (état 0 ou OFF).

En référence aux figures, l'invention vise un dispositif 3, 4 destiné à contrôler un accès fluidique, par exemple à une chambre 30 de réaction (voir ci-après), ce dispositif étant apte à isoler l'accès et même à sceller cet accès.

La partie fluidique du dispositif est réalisée dans un composant 1, 10 fluidique. Le composant 1, 10 fluidique peut se présenter sous la forme d'un unique élément monobloc. Cet élément peut être réalisé par la superposition et l'assemblage de plusieurs couches.

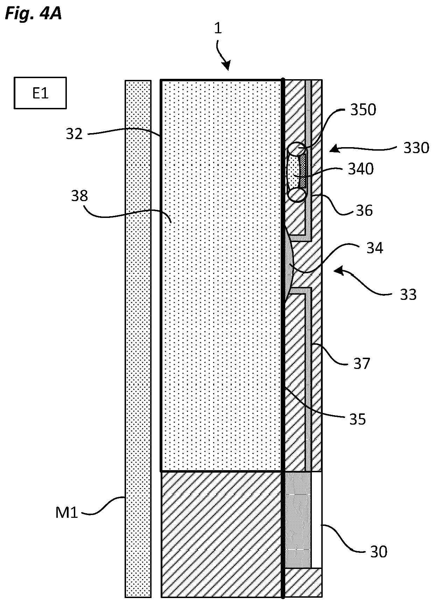

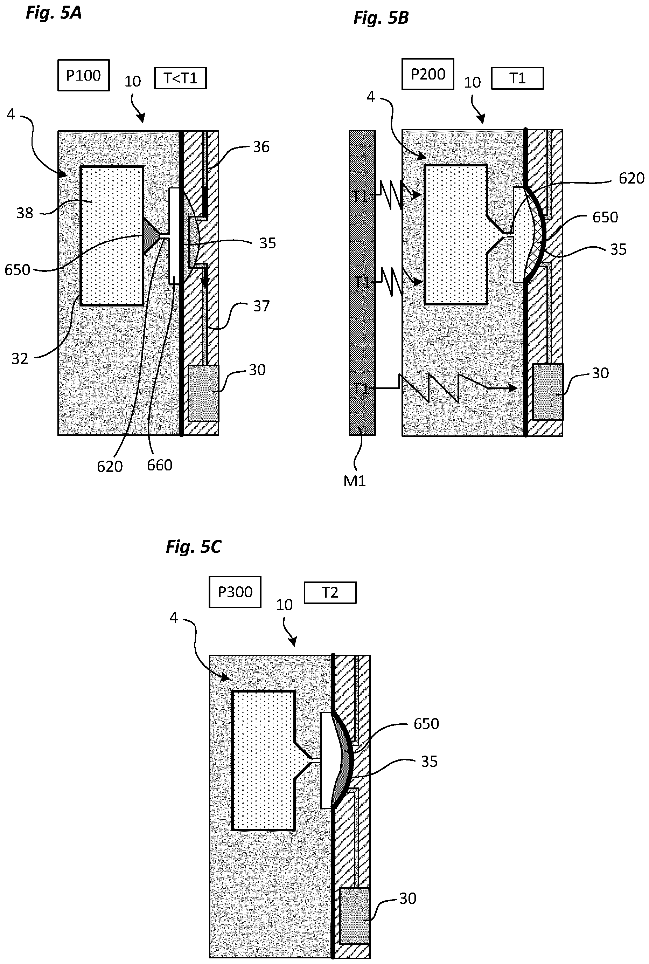

Le dispositif 3, 4 peut être réalisé selon deux variantes de réalisation représentées respectivement sur les figures 4A à 4C pour la première variante de réalisation et sur les figures 5A à 5C pour la deuxième variante de réalisation.

De manière générale, le dispositif utilise une membrane 35 déformable actionnable pour venir fermer l'accès fluidique, des moyens de scellement capables de venir sceller l'accès fluidique et des moyens d'actionnement capables de se dilater pour à la fois actionner la membrane et agir sur les moyens de scellement.

Les moyens d'actionnement peuvent comporter au moins un réservoir étanche de gaz, par exemple d'air, intégré dans le composant microfluidique.

Les moyens de scellement utilisent avantageusement au moins un corps 350, 650 d'un composé fusible, par exemple une paraffine.

Le dispositif comporte également un module M1 de chauffage contrôlé pour :
- Faire fondre le corps 350, 650 de composé fusible,
- Dilater les moyens d'actionnement pour activer ainsi un déplacement de la membrane en vue de fermer l'accès fluidique et favoriser un déplacement du corps 350, 650 de composé fusible à l'état fondu vers une position dans laquelle il permet un scellement de l'accès fluidique, après son retour à un état solide.

Cette fermeture et ce scellement sont réalisés en contrôlant un module de chauffage M1 pour chauffer à une température ayant une valeur suffisante pour à la fois obtenir la déformation de la membrane et pour faire fondre le composé fusible. Cette température est désignée ci-dessous T1. Le scellement est ensuite obtenu lorsque le composé fusible revient à son état solide, c'est-à-dire lorsque la température redescend suffisamment, par exemple à une valeur T2 qui est inférieure à T1.

Selon la variante de réalisation du dispositif, le composé fusible, lorsqu'il revient à l'état solide :
- Vient directement obturer l'accès fluidique et boucher un canal, fermant directement l'accès fluidique ;
- Vient maintenir la membrane en position de fermeture, maintenant ainsi indirectement l'accès fluidique à l'état fermé ;

Le module M1 de chauffage intègre avantageusement une source d'alimentation électrique et utilise un module M2 de contrôle.

Il faut également noter que le module M1 de chauffage peut être intégré dans un support sur lequel vient s'adapter ledit composant 1, 10 fluidique, de sorte que le composant 1, 10 se présente sous la forme d'un consommable, facilement remplaçable. Le support est alors un ensemble mécaniquement distinct du composant 1.

En variante, le module M1 de chauffage peut au moins en partie être intégré audit élément formant le composant 1, 10. Dans ce dernier cas, à titre d'exemple, une résistance peut être intégrée au corps du composant 1, 10, ledit composant 1, 10 venant s'adapter sur un support pour connecter ladite résistance à une source d'alimentation électrique externe.

Le module M2 de contrôle est configuré pour contrôler le module M1 de chauffage en vue d'ajuster et de réguler la température appliquée.

Selon un aspect particulier de l'invention, il est possible de réaliser une balise entièrement autonome, le module de chauffage M1 pouvant être externe, ou intégré au composant ou assemblé sur celui-ci. Il en est de même pour le module M2 de contrôle.

Dans la première variante, le composant 1 fluidique du dispositif 3 présente la particularité de disposer de deux mécanismes de vanne 33, 330 fluidique distincts, l'un permettant d'isoler l'accès fluidique temporairement et l'autre de sceller l'accès fluidique. Les deux mécanismes de vanne fluidique sont par exemple agencés sur un même canal fluidique pour contrôler le flux fluidique à travers ce canal.

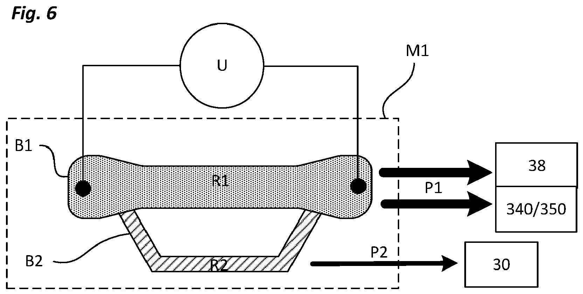

Selon un aspect particulier, ces deux mécanismes de vanne fluidique utilisent tous deux un actionnement thermique. Cet actionnement thermique peut être réalisé grâce au module M1 de chauffage décrit ci-dessus et appartenant au dispositif. Le module M1 de chauffage peut être commun aux deux mécanismes, et capable de fournir de la chaleur à une température donnée et précise et de fournir une ou plusieurs puissances thermiques distinctes (voir réalisation de la figure 6).

Le dispositif peut également comporter un module M2 de contrôle configuré pour contrôler le module M1 de chauffage en vue d'ajuster et de réguler la température appliquée.

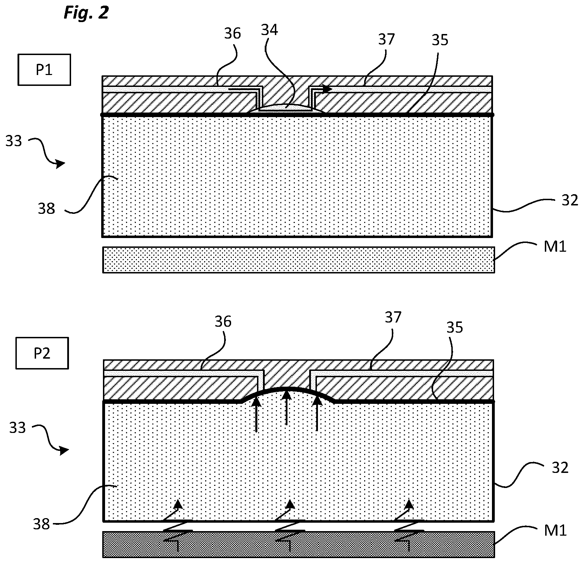

La figure 2 illustre le principe de fonctionnement du premier mécanisme de vanne 33 fluidique employé dans le dispositif 3.

En référence à la figure 2, le premier mécanisme de vanne 33 fluidique est destiné à être agencé sur un circuit fluidique pour contrôler le passage d'un fluide F dans ce circuit fluidique. De manière simplifiée, le premier mécanisme de vanne 33 fluidique est agencé entre un canal d'entrée 36 et un canal de sortie 37 du circuit fluidique.

Les moyens d'actionnement capables de se dilater et utilisés dans le premier mécanisme de vanne 33 fluidique se présentent par exemple sous la forme d'au moins un réservoir étanche 32 destiné à contenir un volume expansible, par exemple de l'air 38.

Le premier mécanisme de vanne 33 fluidique comporte un espace 34 dans lequel débouche le canal d'entrée 36 et duquel ressort le canal de sortie 37, le volume de l'espace 34 étant variable selon la position d'une membrane 35 déformable de la vanne. La membrane 35 est apte à se déformer entre une première position d'ouverture dans laquelle l'espace 34 forme un passage pour le fluide F entre le canal d'entrée 36 et le canal de sortie 37 du circuit fluidique contrôlé (figure 2 - P1) et une position de fermeture dans laquelle elle bloque le passage du fluide F dans le circuit fluidique contrôlé (figure 2 - P2). Dans sa position de fermeture P2, le volume de l'espace 34 est ainsi nul ou quasi-nul, la membrane 35 étant plaquée contre une surface d'un substrat supérieur, sur laquelle débouche les deux canaux. Selon sa position, la membrane 35 permet donc de moduler le volume de l'espace 34 du mécanisme de vanne 33 fluidique.

Pour déplacer la membrane 35 entre sa première position et sa deuxième position, le dispositif comporte un module M1 de chauffage. Le module M1 de chauffage est agencé et configuré pour chauffer le volume d'air 38 placé dans le réservoir 32 afin de venir dilater ce volume d'air. En se dilatant dans le réservoir 32, l'air pousse la membrane 35, la déformant vers sa deuxième position de fermeture (P2). La membrane 35 vient alors obturer le passage entre les deux canaux 36, 37 pour fermer le circuit fluidique en appliquant une pression.

Il faut noter que le réservoir 32 est fermé de manière étanche dans le composant.

Il faut noter que le premier mécanisme de vanne 33 fluidique dispose d'un fonctionnement réversible, dans le sens que la membrane 35 peut être actionnée de sa première position vers sa deuxième position et de sa deuxième position vers sa première position, à l'infini (dans ses limites mécaniques).

Le deuxième mécanisme de vanne 330 fluidique du dispositif est agencé sur le même circuit fluidique que le premier mécanisme, par exemple en amont par rapport à celui-ci sur le canal 36 fluidique du circuit.

Le deuxième mécanisme de vanne 330 fluidique comporte au moins un corps 350 d'un composé fusible (deux corps 350 sur les figures annexées), piégeant initialement un élément capable de se dilater, dans le canal 360 du circuit fluidique considéré, par exemple une bulle de gaz, avantageusement une bulle d'air 340, et formant lesdits moyens d'actionnement précités. Les petits volumes de ce composé fusible sont déposés par exemple à la pipette dans des emplacements prévus sur le bord du canal considéré. L'emplacement de la bulle d'air 340 entre les deux corps 350 de composés fusibles dans chaque canal est aussi prévu dans le circuit micro-fluidique. La bulle d'air 340 est dans un emplacement, en parallèle du canal fluidique et coincé initialement dans cet emplacement par les corps 350 en matériau fusible, présents à l'état solide. Ces emplacements peuvent être obtenus par exemple par usinage au moyen d'une fraise, ou par gravure laser, ou encore par moulage du circuit. L'utilisation de deux corps 350 permet notamment d'assurer un meilleur fonctionnement du dispositif lors du scellement mais il faut comprendre que l'invention reste fonctionnelle en utilisant un seul corps 350 de composé fusible. Dans ce dernier cas, la bulle d'air 340 est coincée dans son emplacement par un seul corps 350.

Le composé fusible peut être un alcane linéaire communément appelé paraffine solide, le type de paraffine étant choisi en fonction de la température à laquelle le composé doit fondre lors de la mise en œuvre du procédé. Le mécanisme de vanne peut notamment se baser en grande partie sur l'utilisation d'une paraffine capable de fondre à une température précise, par exemple le docosane (42-45°C) ou le tetracosane (49-52°C).

Pour amorcer le deuxième mécanisme de vanne 330 fluidique, le dispositif 3 utilise également son module M1 de chauffage. Le module M1 de chauffage est agencé et configuré pour chauffer le composé fusible à une température au moins égale à sa température de fusion.

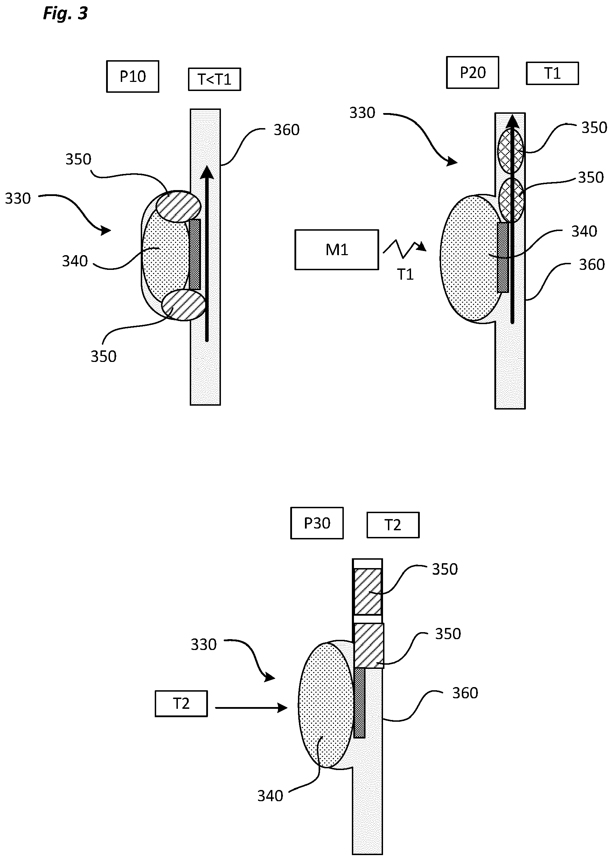

En liaison avec la figure 3, le principe de fonctionnement du deuxième mécanisme de vanne 330 fluidique est le suivant :
- Au-dessous de sa température de fusion (T1), les deux corps 350 restent piégés sur le bord du canal : le fluide peut circuler librement (figure 3 - P10).
- Au-dessus de sa température de fusion (à la température T1), le deuxième composé fusible formant les deux corps 350 fond, la bulle d'air 340 sous pression du fait de la chaleur peut se dilater en poussant les deux corps 350 fondus dans le canal. Il n'y a pas de pression dans le canal principal autre que la pression hydrostatique, et les bouchons fondus soumis à la poussée d'Archimède et aux forces capillaires restent liquides durant toute la durée du chauffage. Expérimentalement, on observe ainsi une légère remontée des deux corps fondus dans le canal (la paraffine étant moins dense que l'eau), la géométrie de la vanne favorisant cette remontée (figure 3 - P20) dans le canal 360.
- Lors du refroidissement, cette légère remontée des corps 350 est suffisante pour que lors de la contraction de la bulle d'air 340, du liquide venant de la chambre 30 de réaction vienne remplir l'espace disponible, laissant une bonne partie du composé fusible se solidifier dans le canal (figure 3 - P30).

A haute température, c'est-à-dire au-dessus de la température de fusion, en surnageant dans les canaux 360 au-dessus de la chambre 30 de réaction, les corps 350 présents à l'état fondu contribuent pour leur part à limiter l'évaporation du liquide.

A basse température, c'est-à-dire en-dessous de la température de fusion, après le chauffage de la chambre 30, le composé fusible revient à l'état solide et les corps 350 scellent complètement les différents canaux.

Ce type de mécanisme de vanne 330 peut notamment être très utile pour sceller une chambre 30 de réaction, susceptible de subir un cyclage en température pour mettre en œuvre une réaction de détection.

Le principe de fonctionnement du dispositif 3 selon la première variante de réalisation et de ses deux mécanismes de vanne fluidiques 33, 330 mutualisés est explicité ci-dessous, en liaison avec les figures 4A à 4C.

Les deux mécanismes sont intégrés dans un même composant 1 fluidique dans lequel le circuit fluidique alimente une chambre 30 de réaction. Les deux mécanismes de vanne fluidique sont placés sur le circuit fluidique comprenant les deux canaux 36, 37 fluidiques en série, le canal 37 fluidique de sortie débouchant directement dans ladite chambre 30 de réaction. Le dispositif 3 est ainsi destiné à contrôler l'accès fluidique à la chambre 30 de réaction, via le circuit fluidique.

Il faut noter que plusieurs autres canaux peuvent déboucher dans la chambre 30 de réaction, notamment un autre canal utilisé par exemple dans un circuit fluidique comportant un évent.

La chambre 30 de réaction peut embarquer au moins une partie des réactifs nécessaires à la mise en œuvre de la réaction.

La réaction de détection réalisée dans la chambre peut notamment être de type amplification bimoléculaire (PCR, LAMP...) ou être de type immuno-enzymatique (type ELISA).

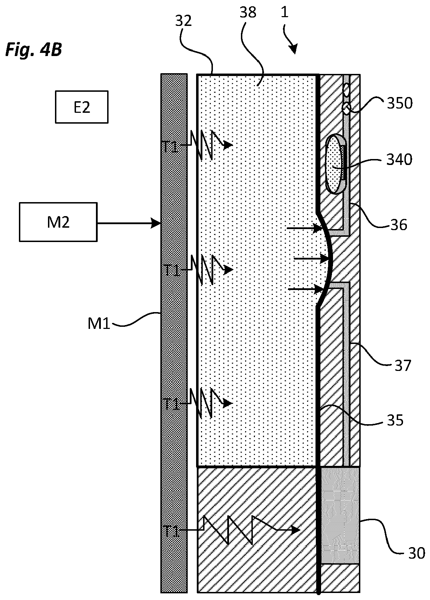

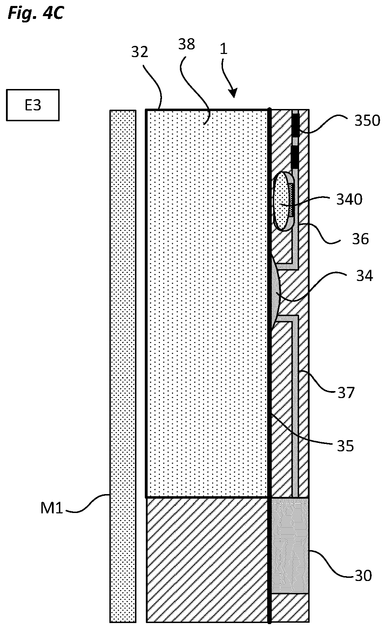

Il faut noter qu'une analyse par amplification biomoléculaire de microorganismes suppose en général une extraction du matériel génomique des microorganismes. Différentes solutions techniques peuvent bien entendu être mises en œuvre pour cela. Le principe de fonctionnement est décrit ci-dessous :
- E1 - Figure 4A : Les mécanismes de vanne fluidique du dispositif sont à l'état ouvert, laissant passer le fluide jusqu'à la chambre 30 de réaction.
- E2 - Figure 4B : On met en œuvre la réaction de détection dans la chambre 30 de réaction. Classiquement, la réaction nécessite un chauffage de la chambre. Le module M2 de contrôle active donc le module M1 de chauffage. Le module M1 de chauffage est activé, permettant de chauffer la chambre de réaction à une première valeur T1 de température nécessaire à la mise en œuvre de la réaction biochimique. Comme indiqué ci-dessus, le chauffage à la cette première valeur T1 de température est suffisant pour entraîner :
   ∘ La dilatation de l'air présent dans le réservoir 32 pour actionner le premier mécanisme de vanne 33 fluidique du dispositif et isoler la chambre pendant la réaction (vanne 33 à l'état 0 et vanne 330 à l'état 1) ;
   ∘ La dilatation de la bulle 340 d'air et la fusion du composé fusible 350 utilisé dans le deuxième mécanisme de vanne 330 fluidique du dispositif ;
   La chambre 30 étant isolée à chaud par la fermeture du premier mécanisme de vanne 33 fluidique, la réaction peut être mise en œuvre dans la chambre 30. La température nécessaire à la réaction peut être identique à celle nécessaire pour l'isolation de la chambre, permettant de combiner les deux effets : réaction et isolation de la chambre par une unique activation du module M1 de chauffage en atteignant la température souhaitée. La réaction d'amplification, par exemple de type PCR ou équivalent, peut utiliser des moyens capables d'émettre un signal optique à travers la chambre de réaction, en vue d'effectuer une détection de matériel biologique dans la chambre 30. Les deux corps 350 de composé fusible, sous une forme fondue, sont également poussés par la dilatation de la bulle 340 d'air, dans le canal 36 fluidique.
- E3 - Figure 4C : Une fois la réaction terminée, le module M1 de chauffage est désactivé ou commandé à une température inférieure à ladite première valeur T1 de température. Cela entraîne la libération de la membrane 35 du premier mécanisme de vanne 33 fluidique (33 à l'état 1) et le refroidissement des deux corps 350 de composé fusible utilisés pour le deuxième mécanisme de vanne 330 fluidique. Le refroidissement se produit jusqu'à une température ayant une valeur inférieure à ladite première valeur T1 de température. Les corps 350 de composé fusible de la deuxième vanne 330 fluidique se fige et viennent directement obturer le canal 36 fluidique du circuit, permettant un scellement de la chambre 30 de réaction (330 à l'état 0). Le composant 1 est alors scellé de manière étanche, permettant sa manipulation et son transport.

Dans ce cadre, le module M1 de chauffage est ainsi destiné à chauffer :
- La chambre 30 de réaction ;
- Le volume d'air 38 utilisé pour l'actionnement du premier mécanisme de vanne 33 fluidique ;
- La bulle d'air 340 et les corps 350 de composé fusible du deuxième mécanisme de vanne 330 fluidique ;

On peut, avec une seule source de chauffage, optimiser le fonctionnement en changeant la répartition de la dissipation de l'énergie.

Il s'agit ainsi de fractionner le module de chauffage en deux branches résistives arrangées en parallèle ou en série.

La figure 6 illustre ce principe de fractionnement du module M1 de chauffage en deux branches résistives B1, B2 en parallèle.

Le montage présenté sur ces figures est celui de deux branches B1, B2 résistives en parallèle, formant deux résistances distinctes en parallèle d'une source d'alimentation U. Si le matériau et l'épaisseur de chaque branche sont les mêmes, ce qui est plus simple pour la fabrication, leur largeur varie, permettant d'obtenir deux résistances distinctes (plus la piste est large, plus la résistance est faible). Le courant dans la première branche B1 résistive s'écrit comme I₁=I×R₂/(R₁+R₂) avec :
- I le courant injecté dans le montage ;
- I₁ le courant qui traverse la première branche ;
- R₁ la résistance de la première branche ;
- R₂ la résistance de la deuxième branche ;

La puissance dissipée (effet Joule) dans la première branche s'écrit P₁=U×I₁=U×R₂/(R₁+R₂) avec la U la tension fournie par le module M2 de contrôle. Si la résistance R₁ est différente de la résistance R₂ cette puissance est différente pour les deux branches et donc la puissance de chauffage est différente pour les deux branches du moyen de chauffage M1.

En jouant sur les valeurs de résistances, il est donc possible d'obtenir plus de puissance thermique dans une branche que dans l'autre. A matériaux et épaisseurs de matériau constants, il est possible d'augmenter la puissance dissipée dans la branche la plus large, comme montré sur la figure 6. Sur la figure 6, on peut voir que la puissance thermique P1 émise par la première branche B1 est plus élevée que celle (P2) émise par la deuxième branche B2 du module. On atteint ainsi plus rapidement la température d'activation du premier mécnaisme de vanne 33 fluidique (dilatation du volume d'air 38) pour sceller la chambre 30 de réaction et d'amorçage du deuxième mécanisme de vanne 330 fluidique (dilatation de la bulle d'air 340 et fusion des corps 350) que celle nécessaire à la réaction dans la chambre 30 de réaction.

Le même principe peut être appliqué à deux branches résistives en série.

Ce principe peut bien entendu être adapté à plusieurs branches en série, parallèle ou série/parallèle, en jouant à chaque fois sur la largeur de chaque piste.

Il est particulièrement avantageux de réaliser le module M1 de chauffage sur un film mince par dépôt (pulvérisation, sérigraphie, pochoir). Il est ainsi possible d'aligner précisément les différentes branches avec les éléments du composant à chauffer et de choisir la puissance thermique dissipée au niveau de chacune des branches.

Ainsi, grâce à ce module de chauffage fractionné, les deux mécanismes de vannes peuvent fonctionner de manière dépendante à la réaction se déroulant dans la chambre 30 de réaction. La fermeture de ces deux mécanismes de vanne peut en effet se produire avant d'atteindre la température nécessaire à la réaction dans la chambre 30 de réaction, ce qui permet d'éviter toute pollution du milieu par renversement accidentel et d'éviter un début d'évaporation de la solution présente dans la chambre pendant la montée en température.

Il faut noter que lorsque le premier mécanisme de vanne 33 est fermé, la pression dans le volume d'air 38 doit être supérieure à la pression dans la chambre 30 de réaction, ceci de manière à suporter une surpression dans la chambre 30 de réaction (par exemple créée par la réaction elle-même). La température de l'air contenu dans le volume d'air 38 doit ainsi être supérieure à la température présente dans la chambre 30 de réaction.

Les figures 5A à 5C montrent la deuxième variante de réalisation du dispositif 4.

Dans cette deuxième variante de réalisation, les moyens de scellement coopèrent avec les moyens d'actionnement capables de se dilater, et utilisent ces moyens d'actionnement pour obtenir le scellement. Ils viennent ainsi s'intégrer sur la première vanne fluidique 33 déjà décrite ci-dessus, qui comporte le réservoir 32 étanche rempli du volume d'air 38 et la membrane 35 déformable. Les moyens de scellement et les moyens d'actionnement sont intégrés dans le composant 10 portant le circuit fluidique à contrôler.

Les moyens de scellement comportent ainsi un canal fluidique 620 débouchant d'un côté dans l'espace interne du réservoir 32, rempli du volume d'air 38, et de l'autre côté dans un espace 660 fermé par la membrane 35. Le dispositif comporte également initialement un corps 650 réalisé dans un composé fusible obturant initialement ce canal à son extrémité débouchant dans le réservoir 32.

Le principe de fonctionnement du dispositif 4 utilisé pour contrôler un accès fluidique à une chambre 30 de réaction est le suivant :
- Initialement, à la température ambiante, c'est-à-dire au-dessous de la température T1 de fusion du composé fusible utilisé, le corps 650 obture le canal 620, et en l'absence de chaleur, la membrane 35 est initialement dans sa position d'ouverture, de sorte que le fluide peut circuler librement entre les deux canaux 36, 37 (figure 5A - P100), permettant ainsi d'alimenter la chambre 30 de réaction.
- Le module de chauffage M1 est activé, pour chauffer le volume d'air 38 à la température T1, permettant la dilatation du volume d'air 38 ainsi que la fusion du corps 650 du composé fusible. En se dilatant, le volume d'air 38 pousse le corps de composé fusible fondu vers l'espace 660, de sorte que le corps vient se déposer dans l'espace 660 et sur la membrane 35 déformée (figure 5B - P200). La dilatation du volume d'air 38 déforme également la membrane 35 vers sa position de fermeture, obturant le passage entre les deux canaux 36, 37. Par sa dilatation, le volume d'air 38 peut avoir tendance à plaquer le composé fusible contre la surface externe de la membrane 35.
- Après refroidissement, à la température T2 inférieure à la température T1, le composé fusible se durcit et vient bloquer et maintenir la membrane 35 dans sa position de fermeture, permettant indirectement la fermeture de l'accès fluidique et le scellement de la chambre 30 de réaction (Figure 5C - P300). Il empêche ainsi le retour de la membrane 35 vers sa position initiale.
Dans cette deuxième variante, le volume d'air 38 joue le rôle des moyens d'actionnement capables de se dilater et permettant le transfert du corps 650 de sa position d'attente vers sa position de scellement lorsqu'il est à l'état fondu. Il joue ainsi le même rôle que celui de la bulle d'air 340 employée dans la deuxième vanne fluidique 330 de la première variante du dispositif 3.

De manière non limitative, les différents éléments fluidiques du dispositif peuvent être réalisés sur un unique composant microfluidique 1, 10. Ce composant 1, 10 peut être réalisé sous la forme d'une carte microfluidique formée d'un empilement de plusieurs couches. L'empilement peut notamment comporter deux substrats réalisés chacun dans un matériau de type COP/COC (Cyclo Oléfin Polymère/Cyclo Olefin Copolymère), polycarbonate ou de type PMMA (Poly-méthacrylate de Méthyle). Il peut notamment présenter des caractéristiques de transparence, suffisantes pour une lecture optique lorsque l'analyse est mise en œuvre directement dans le composant. Une membrane commune aux différents modules du composant peut être intercalée entre les deux substrats. La membrane est formée d'un matériau très déformable élastiquement, lui permettant de revenir à sa forme initiale après déformation. A titre d'exemple, la membrane peut notamment être réalisée dans des matériaux tels que les élastomères de la famille des silicones tels que les MQ (Methyl-Polysiloxanes), les VMQ (Vinyl-Methyl-Polysiloxanes), les PVMQ (Phenyl-Vynil-Methyl-Polysiloxanes) ou les élastomères de type thermoplastiques (TPE), par exemple les TPE-S, TPS, TPE-E, TPC. Elle joue ainsi le rôle de la membrane déformable poussant le fluide d'élution au niveau du module d'élution et des membranes utilisées dans les deux vannes d'isolation à chaud du premier dispositif de contrôle d'accès.

Les différents circuits fluidiques du composant 1, 10 ainsi que la chambre 30 de réaction, peuvent être réalisés par un usinage ou autre procédé appliqué sur un et/ou les des deux substrats du composant.

Le module M1 de chauffage peut être composé par exemple d'un ou plusieurs éléments chauffants, de type résistance ou module à effet Peltier. La température de chaque élément chauffant peut être réglée de manière indépendante. Avantageusement, le module de chauffage M1 peut comporter un seul élément chauffant permettant de chauffer la chambre 30 de réaction, le réservoir 32 d'air, et d'obtenir la fusion de chaque corps 350, 650 de composé fusible.

Un système de régulation de la température peut être employé pour gérer la température de chauffage du module M1 de chauffage. Ce système peut comporter au moins un capteur de température et une boucle de régulation exécutée par le module de contrôle. Le module M1 de chauffage peut faire partie d'un instrument/support sur lequel le composant peut venir s'adapter.

De même, le module M2 de contrôle fait avantageusement partie d'un instrument évoqué ci-dessus.

Dans le but de réaliser une balise entièrement autonome, le module de chauffage M1 peut cependant être intégré au composant ou assemblé sur celui-ci. Il en est de même pour le module M2 de contrôle. Dans ce cas, le système devra comporter une source d'alimentation électrique telle qu'une batterie embarquée.

## Revendications

1. Composant (1, 10) fluidique, comprenant :
- Un circuit fluidique présentant au moins un accès fluidique destiné à être traversé par un fluide (F),
**Caractérisé en ce qu'**il comporte :
- Des moyens d'actionnement capables de se dilater,
- Une membrane (35) déformable actionnable par dilatation desdits moyens d'actionnement et configurée pour se déplacer entre une première position dans laquelle elle autorise le passage du fluide à travers l'accès fluidique et une deuxième position de fermeture dans laquelle elle bloque le passage du fluide à travers l'accès fluidique,
- Des moyens de scellement de l'accès fluidique comprenant au moins un corps d'un composé fusible configuré pour prendre deux états :
∘ Un premier état solide,
∘ Un deuxième état fondu obtenu sous l'effet d'une augmentation de température,
- Ledit corps de composé fusible étant agencé pour être déplacé à l'état fondu par dilatation des moyens d'actionnement, entre une position d'attente et une position distincte de scellement de l'accès fluidique.

2. Composant selon la revendication 1, **caractérisé en ce que** les moyens d'actionnement capables de se dilater comportent un réservoir étanche (32) rempli d'un volume d'air (38), coopérant via un passage fluidique avec la membrane (35).

3. Composant selon la revendication 1 ou 2, **caractérisé en ce que** les moyens d'actionnement comportent une bulle de gaz apte à se dilater et piégée dans un emplacement par ledit corps (350) de composé fusible.

4. Composant selon la revendication 2, **caractérisé en ce que** le passage fluidique est initialement obturé par le corps (650) de composé fusible présent dans son premier état solide et dans sa position d'attente.

5. Composant selon la revendication 4, **Caractérisé en ce que** dans sa position de scellement, le corps (650) de composé fusible vient se déposer sur une face de la membrane, qui est opposée à une face de fermeture de l'accès fluidique.

6. Composant selon l'une des revendications 1 à 5, **caractérisé en ce qu'**il est réalisé sous la forme d'un élément monobloc.

7. Composant selon l'une des revendications 1 à 6, **caractérisée en ce que** la membrane (35) est réalisée dans un matériau de type élastomère.

8. Composant selon l'une des revendications 1 à 7, **caractérisé en ce que** le composé fusible (350) est une paraffine choisie parmi le docosane, le tricosane, le tetracosane, le pentacosane, l'hexacosane et l'octaconsane.

9. Dispositif fluidique **caractérisé en ce qu'**il comporte :
- Un composant (1, 10) fluidique tel que défini dans l'une des revendications 1 à 8,
- Des moyens de chauffage agencés pour :
∘ Chauffer ledit corps de composé fusible à une température suffisante pour le faire passer de son premier état à son deuxième état,
∘ Dilater lesdits moyens d'actionnement, entraînant une déformation de la membrane (35) de sa première position vers sa deuxième position et le déplacement du corps (350, 650) de composé fusible dans son deuxième état vers la position de scellement de l'accès fluidique.

10. Dispositif fluidique selon la revendication 9, **caractérisé en ce que** le circuit fluidique comporte une chambre (30) de réaction et **en ce que** les moyens de chauffage sont agencés pour assurer à la fois un chauffage de :
∘ Ladite chambre (30) de réaction pour réaliser une réaction de détection, et
∘ Dudit corps de composé fusible à une température suffisante pour le faire passer de son premier état à son deuxième état,
∘ Et pour dilater lesdits moyens d'actionnement, entraînant une déformation de la membrane (35) de sa première position vers sa deuxième position et le déplacement du corps (350, 650) de composé fusible dans son deuxième état vers la position de scellement de l'accès fluidique.

11. Dispositif selon la revendication 9 ou 10, **caractérisé en ce que** le module (M1) de chauffage comporte au moins deux branches (B1, B2) résistives en parallèle, configurées chacune pour présenter une résistance électrique distincte, la première branche (B1) étant dédiée à fournir une première puissance thermique et la deuxième branche (B2) dédiée à fournir une deuxième puissance thermique, ladite première puissance thermique étant plus élevée que la deuxième puissance thermique.

12. Dispositif selon la revendication 9 ou 10, **caractérisé en ce que** le module (M1) de chauffage comporte au moins deux branches résistives en série, configurées chacune pour présenter une résistance électrique distincte, la première branche (B1) étant dédiée à fournir une première puissance thermique et la deuxième branche (B2) dédiée à fournir une deuxième puissance thermique, distincte de la première puissance thermique.

13. Procédé d'analyse mis en œuvre dans un dispositif fluidique tel que défini dans l'une des revendications 9 à 12, **caractérisé en ce qu'**il consiste à activer les moyens de chauffage jusqu'à une température suffisante pour à la fois :
∘ Mettre en œuvre une réaction de détection dans ladite chambre (30) de réaction,
∘ Actionner la membrane (35) vers sa position de fermeture pour isoler la chambre (30) de réaction lors de ladite réaction de détection,
∘ Amorcer un scellement de la chambre (30) de réaction par fusion du corps (350, 650) de composé fusible et déplacement dudit corps à l'état fondu vers sa position de scellement.
